# NOUVEAU FASCICULE DE BREVET EUROPEEN

(11) **EP 2 758 241 B2**
(45) Date de publication et mention de la décision concernant l'opposition: **24.07.2024**
(45) Mention de la délivrance du brevet: 02.11.2016
(21) Numéro de dépôt: 12773064.6
(22) Date de dépôt: 20.09.2012
(51) Int. Cl.: B41F 15/08, B41M 3/00, B41F 17/24, B41F 17/28, B41F 17/30

(54) **PROCÉDÉ DE PERSONNALISATION D'AU MOINS DEUX CARTES**
PERSONALISIERUNGSVERFAHREN VON MINDESTENS ZWEI KARTEN
METHOD OF PERSONALISATION OF AT LEAST TWO CARDS

(30) Priorité: 20.09.2011 FR 1158325
(43) Date de publication de la demande: 30.07.2014
(73) Titulaire: IDEMIA France, 92400 Courbevoie (FR)
(72) Inventeur: LAUNAY, François, 92700 Colombes (FR); SIMONNEAUX, Grégory, 92700 Colombes (FR); GEFFRAY, Franck, 92700 Colombes (FR)
(74) Mandataire: Santarelli
(86) Numéro de dépôt international: PCT/FR2012/052094
(87) Numéro de publication internationale: WO 2013/041808

(56) Documents cités:
- WO-A1-95/21423
- CA-A1- 2 260 551
- DE-A1- 2 518 228
- FR-A1- 2 281 221
- FR-A1- 2 651 179
- FR-A1- 2 814 113
- GB-A- 1 028 312
- GB-A- 1 028 313
- GB-A- 1 028 314
- JP-A- 2004 009 657
- US-A- 4 287 285
- US-A- 5 558 021
- US-A1- 2003 072 922
- ANONYMOUS: "Polymer", Retrieved from the Internet <URL:https.://en.wikipedia..org/w/index.php?title=Polymer&oldid=450849894> [retrieved on 20110916]
- ANONYMOUS: "Carte à puce", Retrieved from the Internet <URL:https://fr.wikipedia.orq/w/indcx.php?title-Carte_%C3%A0_puce&oldid=69539080> [retrieved on 20190215]
- ANONYMOUS: "Smart card", Retrieved from the Internet <URL:https://en.wikipedia.org/w/index.php?title=Smart_card&oldid=449158720> [retrieved on 20110908]
- JEAN-PIERRE TUAL: "Cates à puces", Retrieved from the Internet <URL:https://www.techniques-inqenieur.fr/base-documentaire/electronique-photonique-th 13/cartes-electroniques-technoloqies-et-conception-42287210/cartes-a-puces-e3440/construction-e3440niv10004.html.> [retrieved on 20070510]

## Description

La présente invention concerne un procédé de personnalisation d'au moins une carte, et plus particulièrement de la tranche de ces cartes.

Par carte on peut comprendre une carte à puce, avec ou sans contact ou d'autres articles qui présentent des caractéristiques similaires à celles qui sont décrites ci-après. On peut également comprendre une carte sans puce, telle qu'une carte de fidélité, réalisée de préférence en un matériau plastique. La personnalisation pourrait également s'appliquer à des articles tel que les Cédéroms ou Dévédéroms, qui présentent des caractéristiques similaires, notamment en termes d'épaisseur.

Il peut s'agir de cartes d'identification telle que par exemple des cartes bancaires et/ou d'identité et/ou de transport et/ou de fidélité.

Une carte est définie par deux faces opposées deux à deux parallèles, que nous appellerons première face et deuxième face, et une surface périphérique qui entoure la première face et la deuxième face. Cette surface périphérique peut également être appelée la tranche ou le bord de la carte.

Une carte peut être formée d'un matériau unitaire ou d'une pluralité de matériaux, généralement des feuilles, de diverses épaisseurs. Ces feuilles sont disposées en sandwich et assemblées de façon à former un ensemble unitaire. Les cartes peuvent présenter différentes épaisseurs et l'on trouve par exemple les cartes appelées mini SD Card d'une épaisseur de sensiblement 1,4 mm, les cartes USD Card d'une épaisseur d'environ 1 mm ou encore les cartes au format ID1 d'une épaisseur de l'ordre de 0,76 millimètre telle qu'elles sont définies dans la norme ISO7816.

Afin de personnaliser des cartes, il est connu divers procédés permettant de marquer en tout ou partie la première face et/ou la deuxième face. Notamment, il est connu d'imprimer des motifs, par exemple par sérigraphie. Une telle impression peut permettre de différencier les cartes entre elles en y apposant différents coloris et/ou motifs.

En revanche, les tranches de ces cartes sont généralement blanches ce qui peut rendre délicat de les différencier lorsqu'elles sont empilées, par exemple dans un portefeuille ou dans un porte carte.

Il existe toutefois des cartes dont les tranches sont personnalisées de façon unitaire, notamment par une technique de marquage par laser, ou l'on inscrit par exemple un code alphanumérique et/ou des marques sous formes de « barres ». Un tel procédé impose de personnaliser les cartes les unes après les autres ce qui représente un temps et un investissement technique important.

On connaît également l'utilisation de cartes formées d'une ou de plusieurs feuilles et pour lesquelles chaque feuille peut être teintée dans la masse. Un tel mode de réalisation peut donc permettre d'obtenir des cartes dont les tranches sont colorées et peut donc permettre de différencier aisément les cartes entres elles.

Toutefois, les feuilles colorées sont plus chères que les feuilles blanches utilisées traditionnellement et un tel procédé impose d'avoir une importante réserve de feuilles de diverses épaisseurs et de divers coloris afin de subvenir aux besoins du client et aux impératifs d'assemblage de la carte. Une telle réserve peut représenter un volume et un coût non négligeable. Cette réserve peut également présenter un important risque d'obsolescence.

Le document FR 2 281 221 divulgue un procédé de manutention de blocs de papier en vue d'effectuer des opérations sur leurs tranches et notamment une impression.

La présente invention cherche à proposer une solution permettant de personnaliser aisément au moins un ensemble de cartes tout en assurant une facilité technique de réalisation à moindre coût.

L'invention concerne un procédé de personnalisation d'au moins deux cartes selon la revendication 1.

Un tel procédé peut notamment permettre de personnaliser rapidement la tranche d'un ensemble de cartes tout en limitant les coûts plus particulièrement liés à l'utilisation de matériaux teintés dans la masse.

Par une surface uniforme on comprend que les surfaces périphériques alignées peuvent former une surface sensiblement plane.

Par « n », « n+1 » on comprend que les cartes peuvent se suivre. Ainsi, une carte « n » pourrait également être précédée d'une autre carte que l'on appellerait « n-1 », où carte précédente. Cette même carte « n » peut être suivie d'une autre carte que l'on appellera « n+1 », ou carte suivante. Si l'on souhaite former une pile de cartes, la première carte pourra s'appeler « n », la carte suivante s'appellera « n+1 », celle d'après « n+2 » et ainsi de suite.

L'expression « en superposant » pourrait être replacée par l'expression « en empilant ».

Le produit peut également être appliqué sur l'ensemble de la surface uniforme.

Le produit appliqué peut par exemple être une substance colorée telle qu'une encre, un film ou une colle colorée.

En particulier, l'encre utilisée peut être une encre à séchage par rayonnement Ultra Violet (UV) qui possède des caractéristiques de résistance mécanique plus importantes que les encres à solvant.

Selon un autre mode de réalisation, l'encre peut être à base de résine, encore appelée plastisol, qui procure notamment une résistance mécanique suffisante pour la durée de vie d'une carte. A titre d'exemple, la durée de vie d'une carte bancaire est de l'ordre de deux à trois années.

On peut bien évidemment envisager d'appliquer une pluralité d'encre, permettant par exemple d'obtenir une tranche multicolore.

On peut par exemple envisager d'appliquer le procédé décrit dans la personnalisation des pièces d'identités françaises. Une carte d'identité peut alors présenter une tranche composée de trois bandes sensiblement perpendiculaires aux première et deuxième faces. Les trois bandes peuvent par exemple présenter les coloris suivants : bleu, blanc et rouge.

On peut également envisager de pulvériser un produit adhésif, puis d'y déposer par exemple des paillettes ou tout autre élément sous forme de particules.

Il peut également être envisagé d'appliquer une encre infrarouge qui peut par exemple permettre de réaliser un dispositif anti-contrefaçon.

Ce procédé peut être appliqué pour au moins deux cartes, avantageusement au moins 250 cartes et encore plus avantageusement 500 cartes.

On peut également envisager, selon un mode non revendiqué, d'appliquer ce procédé à une pile de plusieurs cédéroms.

En fonction du nombre de cartes et de leur épaisseur, on peut imaginer que la hauteur de la pile soit d'au moins 0,70 millimètre et en particulier de 0,70 millimètre à 2 mètres. Avantageusement, la hauteur de la pile peut varier de 10 centimètres à 70 centimètres et plus particulièrement présenter une hauteur de sensiblement 30 centimètres.

Avantageusement, le dispositif d'application peut être un dispositif de pulvérisation et plus particulièrement un dispositif de pulvérisation de peinture.

Un dispositif de pulvérisation peut notamment permettre d'obtenir une meilleure répartition du produit sur la tranche des articles. En effet, dans le cas d'article composé d'une pluralité de feuilles, comme par exemple dans le cas de certaines cartes à puce, les bords ne sont pas toujours uniformes. Appliquer un produit, par exemple par l'intermédiaire d'un rouleau, peut alors engendrer des problèmes d'homogénéité et de répartition de la substance.

Plus particulièrement, le dispositif de pulvérisation peut être du type pulvérisation directionnelle, tel que par exemple par jet d'encre.

La pulvérisation par jet d'encre est une projection par l'intermédiaire d'au moins une buse qui permet de projeter de très petites gouttes d'encre.

Notamment on peut utiliser le système « goutte à la demande », plus connu sous l'appellation anglaise DOD « Drop On Demand ».

Le dispositif d'application peut également être un dispositif d'impression par transfert et plus particulièrement par transfert thermique. Ce dispositif s'effectue par l'intermédiaire d'un film, ou ruban, qui porte un matériau à appliquer. De préférence, le matériau peut être une colle colorée ou encore une bande enduite. La bande enduite peut être une bande colorée.

On applique le ruban sur la surface à couvrir puis on vient chauffer le ruban, généralement par l'intermédiaire d'une tête thermique. Cette étape active te transfert du matériau porté par le ruban vers la surface à couvrir.

La température de chauffe peut s'étendre de 50°C à 400°C et de préférence de 150°C à 250°C.

Dans notre cas, il peut convenir de rattraper les irrégularités engendrées par la découpe des cartes et/ou par les problèmes d'alignements des différentes feuilles qui composent chaque carte. Pour ce faire, on remplace la tête thermique, qui présente habituellement une surface rigide, par une tête malléable, et donc souple. Il est possible par exemple d'utiliser une tête réalisée dans un matériau au moins en partie à base de silicone.

La tête thermique est conformée pour résister au moins à la température de chauffe mentionnée précédemment.

Une fois l'encre transférée, il est possible d'enlever une partie de l'encre déposée sur la carte, par exemple par l'intermédiaire d'un laser. Une telle ablation peut par exemple permettre de réaliser différents motifs sur la tranche de chaque carte.

En particulier, le procédé peut comprendre une étape qui consiste à
- Positionner un cache en regard d'au moins une partie d'une surface uniforme de telle sorte que le produit ne soit appliqué que sur une partie de cette surface uniforme.

Une telle étape peut notamment permettre de créer un motif particulier au niveau de la tranche, ou surface périphérique, de chaque carte. Le cache peut alors être utilisé comme pochoir.

Le motif peut être une suite de motifs répétitifs, symétriques ou asymétriques.

On peut également envisager de créer un motif particulier à reformer en recomposant la pile de cartes. Cet exemple peut notamment être utilisé dans l'objectif de fidéliser une clientèle et/ou dans le cadre de réaliser une collection, par exemple en personnalisant les tranches de cartes téléphoniques.

On peut également envisager d'utiliser un motif particulier comme détrompeur. Il suffit alors de repositionner la carte personnalisée en vis-à-vis du cache pour s'assurer que la carte n'est pas issue d'une économie parallèle. Cet exemple peut par exemple être utilisé dans la fabrication de passeports.

Selon l'invention, le procédé comprend une étape qui consiste à :
- Presser l'une vers l'autre par un dispositif de pressage les extrémités de la pile en appliquant une pression P sur au moins une partie des faces apparentes des cartes qui forment les extrémités de la pile.

Une telle étape peut notamment permettre d'assurer le maintien des cartes de la pile entre eux. Il peut notamment être utile de maintenir entre eux ces cartes si l'on souhaite transporter la pile de cartes, formées et alignées, d'un point à un autre.

Une telle étape peut également permettre d'éviter que le produit ne s'insinue entre les cartes et peut ainsi limiter les risques de bavures sur la première face ou la deuxième face des cartes.

L'homme du métier peut adapter la pression exercée sur les cartes de la pile en fonction notamment de la rugosité des matériaux utilisés pour former la première et la deuxième face. L'homme du métier peut également adapter la pression exercée en fonction de la viscosité du produit utilisé.

Le dispositif de pressage peut être un instrument en forme de mâchoire tel qu'un étau. Le dispositif de pressage peut assurer la pression par exemple par l'intermédiaire d'une vis ou d'un moyen élastique. Le moyen élastique peut être un ressort. En particulier, le dispositif de pressage peut être relié à un moyen de mesure, tel qu'on dynamomètre, qui peut permettre d'ajuster et/ou de reproduire la pression appliquée.

En outre, le procédé peut comprendre une étape qui consiste à :
- Retirer le dispositif d'alignement de telle sorte que l'on puisse appliquer le produit sur la surface utilisée pour l'alignement de la pile.

En outre, le procédé peut comprendre une étape qui consiste à :
- Pré-sécher par un dispositif de pré-séchage le produit appliqué sur la surface uniforme de telle sorte que le produit ne s'écoule pas entre les faces des cartes.

Cette étape peut idéalement être réalisée en amont d'une étape qui consiste à :
- Séparer les cartes par un dispositif de séparation de telle sorte que le produit ne colle pas les articles entre eux.

Le procédé peut également comprendre une étape qui consiste à :
- Sécher par un dispositif de séchage le produit appliqué sur la surface uniforme.

Une telle étape peut notamment permettre de limiter l'écoulement du produit sur les faces des cartes.

Le dispositif de séchage et/ou de pré-séchage peut par exemple être un dispositif de séchage par infrarouge, par air chaud ou par tout autre dispositif connu.

Avantageusement, le dispositif de séparation est un dispositif apte à générer des vibrations suffisantes pour séparer les cartes après l'étape de séchage et/ou de pré-séchage.

Le dispositif peut générer des vibrations au niveau de la pile de cartes de telle sorte que les cartes séchés ou pré-séchés soient séparés les uns des autres. En effet, le produit appliqué au niveau des tranches peut amalgamer les cartes entre elles.

Le procédé peut notamment comprendre une étape qui consiste à réduire les irrégularités de la surface périphérique.

En effet, chaque carte peut être découpée selon un certain angle. Ainsi, même si l'on aligne les cartes entre elles, la surface périphérique peut être formée d'une multitude d'élément protubérant que nous appellerons crête.

Ces crêtes peuvent générer des irrégularités lors de l'application du produit.

Il a été imaginé de réduire les crêtes en ajoutant au procédé l'étape mentionnée ci-dessus et ainsi obtenir une surface uniforme. Cette étape peut notamment être réalisée par une tête qui vient s'appliquer sur la surface à appliquer.

Selon un premier mode de réalisation, la tête peut comprendre une surface plane qui vient au contact de la surface.

Selon un deuxième mode de réalisation, la tête peut être une tête circulaire qui vient parcourir au moins en partie la surface sur laquelle on souhaite appliquer au moins un produit.

En variante, on peut imaginer que la tête soit fixe et que ce soit la pile de carte qui vienne au contact de la tête.

La tête peut comprendre un dispositif d'abrasion qui agit par vibration ou rotation, et qui vient ainsi réduire les crêtes lorsqu'elles sont au contact de la tête.

Selon un autre mode de réalisation, la tête peut comprendre un dispositif de chauffage configuré pour faire fondre les crêtes.

On peut imaginer que la tête soit la même que celle utilisée pour appliquer le produit sur au moins une partie de l'ensemble des surfaces périphérique formée par l'ensemble des cartes.

Le procédé peut alors comprendre une étape pour réduire les crêtes par une tête chauffante et une étape ultérieure pour appliquer un produit.

Selon un mode non revendiqué, est concernée une carte comprenant une tranche personnalisée comprenant au moins une partie de sa surface périphérique recouverte par au moins un produit, la carte étant réalisée selon le procédé décrit ci-dessus. La carte est par exemple en matière plastique et du type carte à puce, carte de fidélité ou d'identification et le produit étant soit une encre, un film ou une colle colorée.

En particulier, la carte peut être une carte, avec ou sans puce ou microprocesseur. Les dimensions de la carte peuvent par exemple être de sensiblement 85 millimètres x 54 millimètres x 0,76 millimètres. D'autres dimensions peuvent bien évidemment être envisagées et l'on peut notamment envisager de faire varier l'épaisseur de 0,5 millimètres à 4 millimètres et en particulier de 0,7 millimètres à 1,2 millimètres.

Il peut également être envisagé, selon un mode non revendiqué, d'utiliser ce procédé pour personnaliser la tranche d'au moins un cédérom.

Les matériaux utilisés pour la carte peuvent par exemple être des matériaux polymères ou encore des matériaux fibreux. L'homme du métier adaptera le produit à appliquer en fonction du matériau utilisé pour la fabrication de la carte.

D'autres caractéristiques et avantages de l'invention apparaitront à la lumière de la description qui suit, faite référence aux dessins annexés, non limitatifs, dans lesquels :
La figure 1 est une représentation schématique d'une carte que l'on peut souhaiter personnaliser selon le procédé de l'invention ;
La figure 2 est une représentation schématique en perspective du dispositif de personnalisation selon l'invention ;
Le figure 2a est une vue de dessus du dispositif de la figure 2 ;
La figure 3 est une représentation particulière en vue de face d'un dispositif de maintien d'une pile de cartes selon l'invention ;
La figure 3a correspond à la vue de dessus de la figure 3 ;
Les figures 4a à 4h représentent les vues de faces des différentes étapes d'un procédé de réalisation selon l'invention, et les primes les vues de dessus correspondantes.

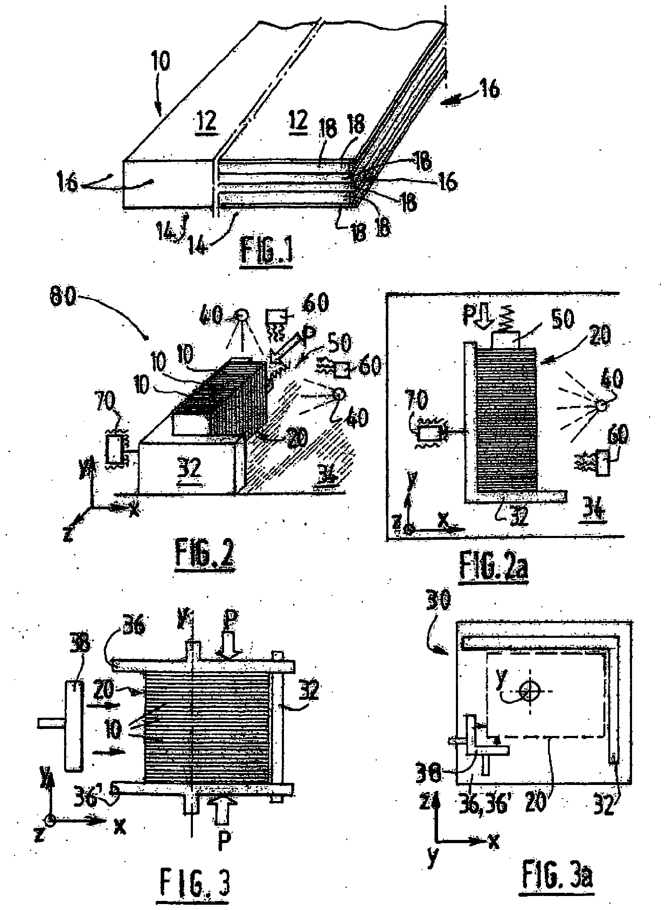

La figure 1 représente une carte 10 qui peut être une carte à puce. Cette carte 10 comprend une première face 12, une deuxième face 14 et une surface périphérique 16.

Comme on l'a représenté sur la partie droite de la figure 1, cette surface périphérique 16 peut présenter des irrégularités, notamment dues à la superposition de différentes feuilles 18 disposées en sandwich.

A contrario, comme on l'a représenté sur la partie gauche de la figure 1, la surface périphérique 16 peut présenter une surface sensiblement plane, notamment lors de la réalisation de l'article 10 avec un matériau unitaire. Cette surface peut toutefois présenter quelques irrégularités dues à l'outil de découpe.

Les figures 2 et 2a représentent le dispositif de personnalisation 80 dans lequel on a superposé un ensemble de cartes 10 de telle sorte que l'ensemble de cartes 10 forme une pile 20. Les cartes 10 de la pile 20 ont été alignées par un dispositif d'alignement de telle sorte que les surfaces périphériques 16 de chaque carte forment une surface sensiblement uniforme.

Dans l'exemple représenté, le dispositif d'alignement comprend un élément sensiblement plan 34 et un élément en forme de L 32 dont les deux branches sont en contact avec l'élément plan 34. On peut envisager que l'élément en forme de L 32 vient, en translation avec l'élément plan 34, au contact de la pile 20. Ainsi, les surfaces périphériques des cartes 10 sont poussées de telle sorte que l'ensemble des cartes forme une pile 20 dont les surfaces extérieures sont sensiblement planes.

Le dispositif de personnalisation 80 comprend également un dispositif de pressage 50 destiné à presser la pile 20 de cartes 10 en direction de l'une des branches du L de l'élément 32. Les cartes 10 de la pile 20 sont ainsi maintenues en position et on peut ainsi aisément déplacer et/ou appliquer divers procédés à la pile 20.

Comme représenté sur les figures 2 et 2a, le dispositif de personnalisation 80 peut comprendre une pluralité de dispositifs d'application 40 de produit, tel que des dispositifs de pulvérisation de peinture. Ces dispositifs de pulvérisation peuvent notamment permettre d'obtenir une répartition uniforme du produit, tel que de la peinture, sur la surface sensiblement uniforme de la pile 20 de cartes 10.

Le dispositif de personnalisation 80 peut également comprendre une pluralité de dispositifs de séchage 60 et/ou de pré-séchage 60' destinés à sécher et/ou pré-sécher la peinture, ou tout autre produit, appliqué sur les tranches des cartes 10 de la pile 20. Dans l'exemple représenté, les dispositifs de séchage 60 et de pré-séchages 60' sont identiques mais on peut imaginer qu'ils correspondent à des matériels différents. Les dispositifs de séchage 60 et/ou de pré-séchage 60' représentés sont par exemple des dispositifs de séchage par infrarouge. L'homme du métier pourra bien évidemment utiliser d'autres dispositifs tels que par exemple un tunnel de séchage et/ou un dispositif de pulvérisation d'air et plus particulièrement d'air chaud.

L'homme du métier adaptera le nombre de dispositifs d'application 40, de séchage 60 et /ou de pré-séchages 60' en fonction du nombre de cartes 10 dans le pile 20 de telle sorte que chaque carte 10 soit soumis au même traitement.

Le dispositif de personnalisation 80 représenté comprend un dispositif de séparation 70. Ce dispositif de séparation 70 permet de générer des vibrations qui favorisent la séparation des cartes 10 qui auraient pu s'agglomérer entre eux de par la nature du produit utilisé. Tel que représenté, le dispositif de séparation 70 est appliqué au niveau de l'élément en forme de L 32 mais on peut envisager d'appliquer les vibrations au niveau de l'élément plan 34, du dispositif de pressage 50 et/ou directement au niveau de la pile 20.

On comprend que pour obtenir une séparation optimum des cartes par vibrations, la pression P exercée par le dispositif de pressage 50 au niveau des extrémités de la pile 20 de cartes 10 doit être relâchée.

En particulier, le dispositif de séparation par vibrations peut être réalisé par un dispositif excentrique (non représenté) relié à un dispositif d'entrainement tel qu'un moteur électrique (non représenté).

Le dispositif représenté sur les figures 2 et 2a peut notamment permettre de personnaliser deux des quatre surfaces planes de la pile 20 formées par les tranches des cartes 10. Dans la mesure où l'on souhaite personnaliser l'ensemble des tranches des cartes 10, il suffit de repositionner la pile 20 de cartes 10 de telle sorte que les tranches non personnalisées soient visibles et de recommencer l'opération de maintien et de personnalisation des cartes.

Les figures 3 et 3a représentent un exemple particulier d'un dispositif de maintien tel qu'il peut être utilisé par le procédé selon l'invention.

Ce dispositif de maintien peut comprendre deux plaques 36 et 36' destinées à prendre en sandwich une pluralité de cartes 10 afin de former une pile 20.

Les bords de la pile 20 sont ensuite alignés par un moyen de maintien qui comprend un élément en forme de L 32. Cet élément en forme de L 32 peut être maintenu entre les plaques 36 et 36' par un dispositif amovible (non représenté). Le dispositif amovible peut par exemple être un système vis écrou ou encore un système de billes rétractables qui coopèrent avec des orifices correspondant.

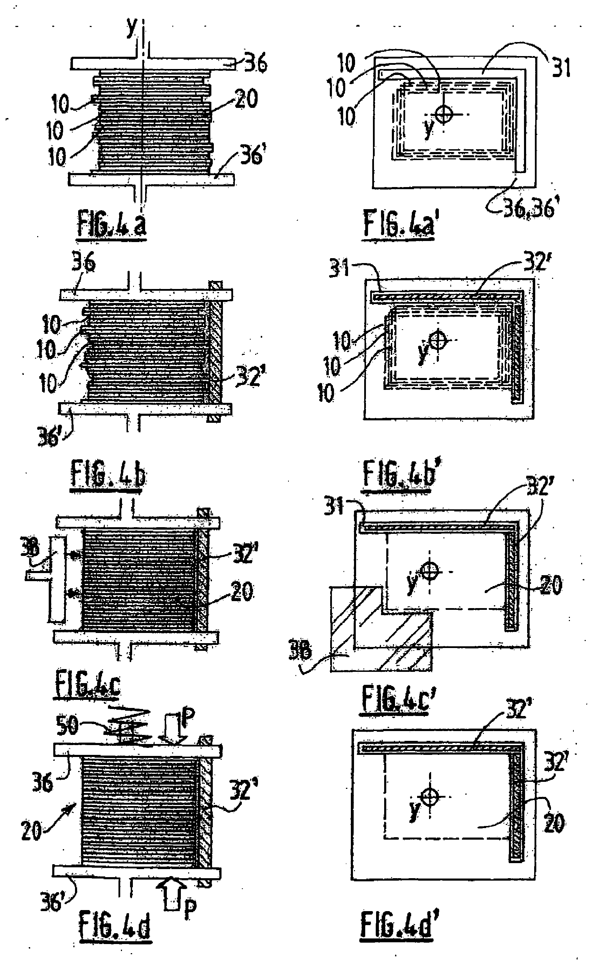

L'élément en forme de L peut être formé de deux plaques 32' distinctes qui, une fois assemblées, forment un L. Il peut également être envisagé que les plaques 32' qui forment le L coulissent dans des rainures 31 prévues à cet effet dans les plaques 36 et 36' (représentées sur les figures 4b à 4d).

L'élément en forme de L 32 (figures 3 et 3a) et/ou les plaques 32' (figures 4b à 4d') forment des butées destinées à maintenir l'alignement de la pile 20. L'homme du métier pourra bien évidemment adapter les formes de ces butées. En particulier, les butées pourront être sous forme de tiges, par exemple filetées, traversant les plaques 36 et 36'.

On peut également envisager que les plaques 32' soient des caches qui représentent un motif particulier. Il peut alors être envisagé de laisser ces caches lorsque l'on applique le produit afin de reproduire le motif représenté au niveau des caches. Les caches agissent alors comme des pochoirs.

Une fois les cartes 10 disposés entre les plaques 36, 36' et l'élément en forme de L 32 mis en place, un dispositif de tassage 38 vient tasser les cartes 10 contre l'élément 32 afin de former une pile 20 dont le bord est sensiblement plan.

Une fois la pile 20 formée, on peut appliquer une pression P sur les plaques 36 et 36' selon l'axe Y de telle sorte que la pile 20 reste formée. On peut alors retirer l'élément en forme de L 32 et le dispositif de tassage 38 afin de rendre accessible l'ensemble des bords de la pile 20. On peut alors appliquer un produit sur l'ensemble des bords de la pile 20.

Selon un mode de réalisation particulier, la pile 20 peut être mise en rotation autour d'un axe Y, traversant les premières et deuxièmes faces des cartes 10. Il est alors possible de pulvériser un produit sur l'ensemble des tranches des cartes 10 qui forment la pile 20.

Nous allons maintenant décrire différentes étapes de réalisation du procédé selon l'invention.

Selon une première étape, représentée sur les figures 4a et 4a', on empile un certain nombre de cartes 10 et on positionne ces cartes 10 entre deux plaques 36 et 36'.

Selon une deuxième étape, représentée sur les figures 4b et 4b', on positionne des plaques 32' destinées à former un élément en forme de L 32. Ces plaques 32' sont conformées pour coulisser dans des rainures 31 prévues à cet effet dans les plaques 36 et 36'. Les plaques 32' ainsi positionnées forment des butées.

Il peut être envisagé que la deuxième étape soit réalisée avant la première étape.

Dans une troisième étape, représentée sur les figures 4c et 4c', les cartes 10 sont poussés en direction des butées par un dispositif de tassage 38. Comme on peut le constater sur la figure 4c' qui représente une vue de dessus, les cartes 10 forment une pile 20 dont les bords sont parfaitement alignés.

Une quatrième étape, représentée sur les figures 4d et 4d', consiste à presser par un dispositif de pressage 50 les cartes 10 qui forment les extrémités de la pile 20 de telle sorte que le maintien de la pile 20 soit assuré.

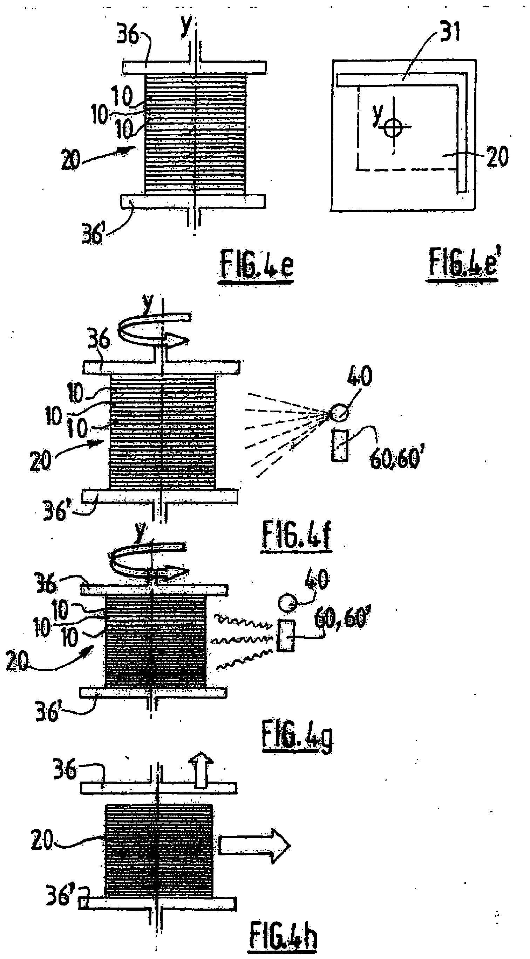

Une cinquième étape, représentée sur les figures 4e et 4e', consiste à retirer les plaques 32' qui forment butées de telle sorte que l'ensemble des bords de la pile 20, formés par les surfaces périphériques des articles 10, soient accessibles.

Une sixième étape, représentée sur la figure 4f, consiste à faire tourner la pile 20 autour de son axe Y et à pulvériser par un dispositif d'application 40 une peinture sur les bords de la pile.

Une septième étape, représentée sur la figure 4g, consiste à sécher par un dispositif de séchage 60 la peinture appliquée sur la pile 20 de cartes 10.

Selon un mode de réalisation préféré, l'étape de séchage est accolée aux têtes d'impression afin d'éviter la migration de l'encre entre les cartes. Le sécheur peut être thermique ou par rayonnement Ultra Violet (UV).

Une huitième étape, représentée sur la figure 4h, peut consister à retirer les plaques 36 et 36' afin de récupérer les cartes 10.

On obtient ainsi une pluralité de cartes 10 dont les tranches peuvent être colorées.

Le dispositif de personnalisation et/ou les différentes étapes du procédé peuvent bien évidemment être adaptées en fonction du nombre de cartes que l'on souhaite personnaliser et du type de personnalisation.

Ainsi, et comme on a pu le décrire précédemment, il est possible d'ajouter d'autres étapes de pulvérisation et/ou séchage, notamment si l'on souhaite appliquer différents produits sur les bords des articles.

Il est également possible d'ajouter des étapes de pré-séchage et/ou de vibration si l'on utilise un produit qui risque d'agglomérer les articles entre eux.

Si l'on souhaite appliquer le procédé sur un ensemble d'articles circulaires non revendiqués tel que des cédéroms, il est bien évident que les formes des butées et du dispositif de tassage seront adaptées.

Selon un autre mode de réalisation, le dispositif d'application comprend une tête d'impression chauffante cylindrique qui vient au contact de la surface à couvrir. Un ruban est inséré entre la tête d'impression et la surface à couvrir. Le ruban comprend un élément support et un élément à appliquer. Ce ruban est entrainé pendant que la tête épouse la surface à couvrir afin d'assurer le transfert de l'élément à appliquer sur la surface à couvrir.

## Revendications

1. Procédé de personnalisation d'au moins deux cartes (10), chaque carte (10) comprenant une première face (12), une deuxième face (14) et une surface périphérique (16), ce procédé comprenant les étapes suivantes :
• Former une pile (20) d'au moins deux cartes (10) en matière plastique et avant une épaisseur comprise entre 0.5 mm et 4 mm, du type carte à puce, ou carte de fidélité ou d'identification, en superposant la première face (12) ou la deuxième face (14) d'une carte « n » de telle sorte que la première face ou la deuxième face d'une carte « n+1 » soit en contact avec la première face (12) ou la deuxième face (14) de la carte « n » ;
• Aligner par un dispositif d'alignement (32, 34 ; 32, 38 ; 31, 32', 38) au moins une partie de la surface périphérique (16) de la carte « n » avec au moins une partie de la surface périphérique de la carte « n+1 » de telle sorte qu'au moins une partie de l'ensemble des surfaces périphérique de chaque carte forme au moins une surface uniforme ;
• Presser l'une vers l'autre par un dispositif de pressage (50) les extrémités de la pile (20) en appliquant une pression P sur au moins une partie des faces apparentes des cartes qui forment les extrémités de la pile (20) ; et
• Appliquer par un dispositif d'application (40) au moins un produit sur au moins une partie de la surface uniforme

2. Procédé selon la revendication 1, **caractérisé en ce qu'**il comprend en outre une étape qui consiste à :
• Positionner un cache en regard d'au moins une partie d'une surface uniforme de telle sorte que le produit ne soit appliqué que sur une partie de cette surface uniforme.

3. Procédé selon l'une quelconque des revendications 1 ou 2 **caractérisé en ce qu'**il comprend une étape qui consiste à :
• retirer le dispositif d'alignement (32, 34 ; 32, 38 ; 31, 32', 38) de telle sorte que l'on puisse appliquer le produit sur la surface utilisée pour l'alignement de la pile (20).

4. Procédé selon l'une quelconque des revendications 1 à 43, **caractérisé en ce qu'**il comprend une étape qui consiste à réduire les irrégularités de la surface périphérique.

5. Procédé selon l'une quelconque des revendications 1 à 54, **caractérisé en ce qu'**il comporte en outre les étapes suivantes :
• sécher et/ou pré-sécher par un dispositif de séchage (60) et/ou par un dispositif de pré-séchage (60') le produit appliqué sur la surface uniforme de telle sorte que le produit ne s'écoule pas entre les faces (12, 14) des cartes;
• Séparer les cartes (10) par un dispositif de séparation (70) de telle sorte que le produit ne colle pas les cartes entre elles.

6. Procédé selon la revendication 5, **caractérisé en ce que** le dispositif de séparation (70) est un dispositif apte à générer des vibrations suffisantes pour séparer les cartes (10) après l'étape de séchage et/ou de pré-séchage.

7. Procédé selon l'une quelconque des revendications 1 à 5, **caractérisé en ce que** le dispositif d'application (40) est un dispositif de pulvérisation.

8. Procédé selon la revendication précédente, **caractérisé en ce que** le dispositif de pulvérisation est une pulvérisation par jet d'encre.

9. Procédé de personnalisation selon l'une quelconque des revendications 1 à 5, **caractérisé en ce que** le dispositif d'application est un dispositif de transfert.

10. Procédé de personnalisation selon la revendication précédente, **caractérisé en ce que** le dispositif de transfert est un transfert thermique.

11. Procédé selon l'une des revendications 9 ou 10, **caractérisé en ce que** le dispositif de transfert comprend une tête formée d'un matériau malléable.

12. Procédé selon la revendication précédente, **caractérisé en ce que** le matériau malléable qui forme la tête est un matériau qui comprend au moins en partie du silicone.

13. Procédé selon l'une quelconque des revendications 1 à 10, **caractérisé en ce que** le produit est une encre par séchage à Ultra Violet.

14. Procédé selon l'une quelconque des revendications 1 à 10, **caractérisé en ce que** le produit est une encre à base de résine.

## Patentansprüche

1. Verfahren zur Personalisierung von mindestens zwei Karten (10), wobei jede Karte (10) eine erste Fläche (12), eine zweite Fläche (14) und eine Umfangsfläche (16) umfasst, wobei dieses Verfahren die folgenden Schritte umfasst:
- Bilden eines Stapels (20) von mindestens zwei Karten (10) aus Kunststoffmaterial und mit einer Dicke zwischen 0,5 mm und 4 mm von dem Typ einer Chipkarte oder Kundenkunde oder einer Identitätskarte, indem die erste Fläche (12) oder die zweite Fläche (14) einer Karte "n" derart übereinandergelegt wird, dass die erste Fläche und die zweite Fläche einer Karte "n+1" mit der ersten Fläche (12) oder der zweiten Fläche (14) der Karte "n" in Kontakt gelangt;
- Ausrichten, durch eine Ausrichtvorrichtung (32, 34; 32, 38; 31, 32', 38), mindestens eines Abschnitts der Umfangsfläche (16) der Karte "n" mit mindestens einem Abschnitt der Umfangsfläche der Karte "n+1" derart, dass mindestens ein Abschnitt der Gesamtheit der Umfangsflächen jeder Karte mindestens eine einheitliche Fläche bildet;
- Pressen, durch eine Pressvorrichtung (50), der Enden des Stapels (20) aneinander, indem ein Druck P auf mindestens einen Abschnitt der sichtbaren Flächen der Karten ausgeübt wird, welche die Enden des Stapels (20) bilden; und
- Aufbringen, durch eine Aufbringvorrichtung (40), mindestens eines Produkts auf mindestens einem Abschnitt der einheitlichen Fläche.

2. Verfahren nach Anspruch 1, **dadurch gekennzeichnet, dass** es außerdem einen Schritt umfasst, der aus dem Folgenden besteht:
- Positionieren einer Abdeckung in Bezug auf mindestens einen Abschnitt einer einheitlichen Fläche derart, dass das Produkt nur auf einem Abschnitt dieser einheitlichen Fläche aufgebracht wird.

3. Verfahren nach einem der Ansprüche 1 oder 2, **dadurch gekennzeichnet, dass** es einen Schritt umfasst, der aus dem Folgenden besteht:
- Zurückziehen der Ausrichtvorrichtung (32, 34; 32, 38; 31, 32', 38) derart, dass das Produkt auf der zur Ausrichtung des Stapels (20) verwendeten Fläche aufgebracht werden kann.

4. Verfahren nach einem der Ansprüche 1 bis 3, **dadurch gekennzeichnet, dass** es einen Schritt umfasst, der aus dem Reduzieren der Unregelmäßigkeiten der Umfangsfläche besteht.

5. Verfahren nach einem der Ansprüche 1 bis 4, **dadurch gekennzeichnet, dass** es außerdem die folgenden Schritte umfasst:
- Trocknen und/oder Vortrocknen, durch eine Trocknungsvorrichtung (60) und/oder durch eine Vertrocknungsvorrichtung (60`), des auf der einheitlichen Fläche aufgebrachten Produkts derart, dass das Produkt nicht zwischen die Flächen (12, 14) der Karten fließt;
- Trennen der Karten (10) durch eine Trennvorrichtung (70) derart, dass das Produkt die Karten nicht aneinanderklebt.

6. Verfahren nach Anspruch 5, **dadurch gekennzeichnet, dass** die Trennvorrichtung (70) eine Vorrichtung ist, die ausgelegt ist, ausreichende Vibrationen zu erzeugen, um die Karten (10) nach dem Trocknungs- und/oder Vortrocknungsschritt zu trennen.

7. Verfahren nach einem der Ansprüche 1 bis 5, **dadurch gekennzeichnet, dass** die Aufbringvorrichtung (40) eine Pulverisierungsvorrichtung ist.

8. Verfahren nach dem vorhergehenden Anspruch, **dadurch gekennzeichnet, dass** die Pulverisierungsvorrichtung eine Tintenstrahl-Pulverisierung ist.

9. Personalisierungsverfahren nach einem der Ansprüche 1 bis 5, **dadurch gekennzeichnet, dass** die Aufbringvorrichtung eine Transfervorrichtung ist.

10. Personalisierungsverfahren nach dem vorhergehenden Anspruch, **dadurch gekennzeichnet, dass** die Transfervorrichtung ein Thermotransfer ist.

11. Verfahren nach einem der Ansprüche 9 oder 10, **dadurch gekennzeichnet, dass** die Transfervorrichtung einen Kopf umfasst, der aus einem nachgiebigen Material gebildet ist.

12. Verfahren nach dem vorhergehenden Anspruch, **dadurch gekennzeichnet, dass** das nachgiebige Material, das den Kopf bildet, ein Material ist, das mindestens teilweise Silikon umfasst.

13. Verfahren nach einem der Ansprüche 1 bis 10, **dadurch gekennzeichnet, dass** das Produkt eine mit Ultraviolettlicht getrocknete Tinte ist.

14. Verfahren nach einem der Ansprüche 1 bis 10, **dadurch gekennzeichnet, dass** das Produkt eine Tinte auf Harz-Basis ist.

## Claims

1. Method of personalizing at least two cards (10), each card (10) comprising a first face (12), a second face (14) and a peripheral surface (16), this method comprising the following steps:
• forming a stack (20) of at least two cards (10) made of plastic material and having a thickness of between 0.5 mm and 4 mm, of the chip card, or loyalty or identification card type, by superposing the first face (12) or the second face (14) of a card "n" in such a way that the first face or the second face of a card "n+1" is in contact with the first face (12) or the second face (14) of the card "n";
• aligning at least part of the peripheral surface (16) of the card "n" with at least part of the peripheral surface of the card "n+1" using an alignment device (32, 34; 32, 38; 31, 32', 38) so that at least part of the set of peripheral surfaces of each card forms at least one uniform surface;
• pressing the ends of the pile (20) towards one another using a pressing device (50)by applying pressure P to at least part of the visible faces of the cards which form the ends of the pile (20); and applying at least one product to at least part of the uniform surface using an application device (40).

2. Method according to Claim 1, **characterized in that** it further comprises a step consisting in:
• positioning a mask opposite at least part of a uniform surface in such a way that the product is applied only to part of this uniform surface.

3. Method according to any one of Claims 1 or 2, **characterized in that** it comprises a step consisting in:
• removing the alignment device (32, 34; 32, 38; 31, 32', 38) in such a way that the product can be applied to the surface used for aligning the stack (20) .

4. Method according to any one of Claims 1 to 3, **characterized in that** it comprises a step consisting in reducing the irregularities of the peripheral surface.

5. Method according to any one of Claims 1 to 4, **characterized in that** it further comprises the following steps:
• drying and/or pre-drying, using a drying device (60) and/or a pre-drying device (60'), the product applied to the uniform surface in such a way that the product does not run between the faces (12, 14) of the cards;
• separating the cards (10), using a separation device (70) so that the product does not stick the cards together.

6. Method according to Claim 5, **characterized in that** the separation device (70) is a device able to generate enough vibration to separate the cards (10) after the drying and/or pre-drying step.

7. Method according to any one of Claims 1 to 5, **characterized in that** the application device (40) is a spraying device.

8. Method according to the preceding claim, **characterized in that** the spraying device is an inkjet.

9. Method of personalizing according to any one of Claims 1 to 5, **characterized in that** the application device is a transfer device.

10. Method of personalizing according to the preceding claim, **characterized in that** the transfer device is a thermal transfer.

11. Method according to either of Claims 9 or 10, **characterized in that** the transfer device comprises a head made of a malleable material.

12. Method according to the preceding claim, **characterized in that** the malleable material that forms the head is a material that, at least in part, contains silicone.

13. Method according to any one of Claims 1 to 10, **characterized in that** the product is a UV-curable ink.

14. The method according to any one of claims 1 to 10, **characterized in that** the product is a resin-based ink.
